# EUROPÄISCHE PATENTSCHRIFT

(11) **EP 3 262 394 B1**
(45) Veröffentlichungstag und Bekanntmachung des Hinweises auf die Patenterteilung: **25.05.2022**
(21) Anmeldenummer: 16706562.2
(22) Anmeldetag: 17.02.2016
(51) Int. Cl.: G01M 17/08, B65G 43/00

(54) **VORRICHTUNG UND VERFAHREN ZUR ERHÖHUNG DER SICHERHEIT VON ACHTERBAHNEN UND/ODER KARUSSELS**
APPARATUS AND METHOD FOR SAFETY ENHANCEMENT OF ROLLERCOASTERS AND CARROUSELS
APPAREIL ET PROCÉDÉ D'AMÉLIORATION DE LA SÉCURITÉ DES MONTAGNES RUSSES ET CARROUSELS

(30) Priorität: 23.02.2015 DE 102015102556
(43) Veröffentlichungstag der Anmeldung: 03.01.2018
(73) Patentinhaber: Mack Rides GmbH & Co. KG, 79183 Waldkirch (DE)
(72) Erfinder: HAUER, Roman, 79183 Waldkirch (DE)
(74) Vertreter: Westphal, Mussgnug & Partner Patentanwälte mbB
(86) Internationale Anmeldenummer: PCT/EP2016/053320
(87) Internationale Veröffentlichungsnummer: WO 2016/135017

(56) Entgegenhaltungen:
- EP-B1- 1 464 919
- GB-A- 2 406 844
- JP-A- 2007 275 244
- JP-A- 2007 275 244
- US-A- 5 563 392
- US-A1- 2013 079 169

## Beschreibung

Die Erfindung betrifft eine Vorrichtung und ein Verfahren zur Erhöhung der Sicherheit von Achterbahnen und/oder Karussells gemäß den Oberbegriffen der Patentansprüche 1 und 13.

Bekannt sind Überwachungssysteme, die einen Verschleiß von Komponenten bei Fahrgeschäften überwachen. Beispielsweise offenbart die EP 1 464 919 B1 ein Verfahren und eine Vorrichtung zum Überwachen von Kettenverschleiß bei Kettenantriebseinheiten, die beispielsweise in Transportsystemen wie Liftkonstruktionen verwendet werden.

Wird von den im Stand der Technik bekannten Überwachungssystemen eine Veränderung erkannt, beispielsweise eine Verschlechterung einer Trageigenschaft eines Verschleißteiles, leiten die bekannten Überwachungssysteme als Reaktion in der Regel Warnmeldungen für den Betreiber ein.

Weiteren Stand der Technik bilden EP 1 464 919, JP 2007 275 244 A, GB 2 406 844 A und US 5 563 392 A. Insbesondere betrifft das Patentdokument JP 2007 275 244 A ein Sicherheitsüberwachungssystem für Wagen einer Achterbahn, wobei Beschleunigungssensoren verwendet werden, um Kraftkomponenten zu erfassen, denen der Wagen während einer Fahrt ausgesetzt ist. Anhand der aufgenommenen Beschleunigungsprofil in der Zeit werden Gefahrensituationen erkannt.

Als Nachteil wird dabei empfunden, dass den bekannten Systemen ein Verschleiß, also ein Materialabtrag, zwingend zugrunde liegt. Veränderungen der inneren Beanspruchungen wie z.B. Spannungen, können jedoch unzulässige Werte erreichen, ohne dass eine Abnutzung des Materials vorliegt. Diese Veränderungen der Beanspruchungen werden durch die o.g. Überwachungssysteme nicht erfasst.

Weiterhin bekannt sind Beanspruchungsmessungen an Fahrgeschäften zur Verifikation der in der Theorie getroffenen Lastannahmen. Im Stand der Technik werden derartige Messungen lediglich durch eine Momentaufnahme, d.h. durch eine einmalige Messung zu einem bestimmten Zeitpunkt oder durch eine Messreihe während eines bestimmten Zeitraums, überprüft, normalerweise vor Inbetriebnahme oder nach Auftreten eines Schadens oder Unfalls.

Als Nachteil wird dabei empfunden, dass bei den bekannten Verfahren der Beanspruchungsmessung eine Beeinträchtigung der Sicherheit nur temporär erkannt und somit eine Sicherheit während des gesamten Betriebs des Fahrgeschäftes nicht garantiert werden kann. Außerdem könnte zum Zeitpunkt der einmaligen Messung bereits eine fortgeschrittene Schädigung vorliegen, deren Sanierung erhöhte wirtschaftliche und betriebliche Konsequenzen nach sich ziehen würde.

Weiterhin werden nach Stand der Technik die Messungen der Beanspruchungen und deren Auswertungen über Datenerfassungssysteme durchgeführt, die nicht mit dem Steuerungssystem des Fahrgeschäftes verbunden sind und deren Ergebnisse vom Mensch erforderliche Entscheidungen nach sich ziehen.

Als Nachteil wird dabei empfunden, dass bei den bekannten Verfahren erforderliche Maßnahmen manuell, vom jeweiligen Bearbeiter abhängig und zeitverzögert eingeleitet werden. Bei den bekannten Beanspruchungsmessungen gibt es keine automatisierte Schnittstelle zwischen dem Datenerfassungssystem und der Steuerung des Fahrgeschäftes.

Die Aufgabe der Erfindung besteht daher darin, ein Sicherheitssystem für Achterbahnen und/oder Karussells bereitzustellen, bei welchem Beanspruchungen über eine Langzeitmessung von einer Sicherheitssteuerung direkt am Fahrgeschäft überwacht werden, das ständig aktiv ist und damit frühzeitig eine Beeinträchtigung der Sicherheit des Fahrgeschäftes erkennen kann. In der Regel liegen zwischen der Erkennung einer Überbeanspruchung und dem Beginn der Schädigung des Materials viele Wochen, so dass die Erfindung auch als Frühwarnsystem angesehen werden kann, welches in der Abwehr der Risiken zusätzlichen Handlungsspielraum eröffnet.

Die Aufgabe der Erfindung wird gelöst durch eine Vorrichtung zur Erhöhung der Sicherheit von Achterbahnen und/oder Karussells mit den Merkmalen des Patentanspruchs 1 und durch ein Verfahren zur Erhöhung der Sicherheit von Achterbahnen und/oder Karussells mit den Merkmalen des Patentanspruchs 13.

Vorteilhafte Ausgestaltungen und Weiterbildungen der Erfindung sind in den Unteransprüchen angegeben.

Die erfindungsgemäße Vorrichtung zur Erhöhung der Sicherheit von Achterbahnen und/oder Karussells weist wenigstens eine Sicherheitseinrichtung auf, wobei die Sicherheitseinrichtung erste Mittel zur Langzeitmessung von wenigstens einer Beanspruchung in wenigstens einem Bauteil während des Betriebs einer Achterbahn und/oder eines Karussells und zweite Mittel zur Erkennung der Änderung der Beanspruchung und Einleitung von wenigstens einer Reaktion an der Achterbahn und/oder dem Karussell aufweist.

Nach der Erfindung weist die Sicherheitseinrichtung zweite Mittel zur Einleitung wenigstens einer automatischen Sicherheitsreaktion auf. Mittels einer derartigen Automatisierung können mögliche Fehlerquellen beim Einleiten der Sicherheitsreaktionen, beispielsweise menschliches Versagen, vermindert und damit die Effektivität der Sicherheitsreaktionen erhöht werden

Im Sinne der Erfindung bezieht sich der Begriff Fahrgeschäft auf eine Achterbahn und/oder auf ein Karussell.

Hier und im Folgenden wird mit dem Begriff Langzeitmessung eine Messreihe über einen längeren Zeitraum einer zu messenden und während des Zeitraums der Messreihe, d.h. der Messzeit, möglicherweise variierenden Größe verstanden, wobei die Messung auch in Form von einzelnen Messungen während der Messzeit zufällig oder periodisch erfolgen kann. Bei einem Fahrgeschäft kann die Messzeit beispielsweise die Betriebszeiten während der gesamten Lebensdauer des Fahrgeschäftes umfassen, wobei einzelne Messungen über jeweils eine Fahrtdauer oder in bestimmten Bereichen einer Fahrtstrecke ausgeführt werden.

Mit dem Begriff Beanspruchungen werden hier und im Folgenden Auswirkungen einer äußeren Belastung u.a. in Form einer Zug- bzw. Druckspannung oder einer Schubspannung auf das Innere eines Körpers bzw. eines Werkstoffes bezeichnet. Mit einer derartigen Sicherheitseinrichtung kann eine Beeinträchtigung der Sicherheit über die Lebensdauer des Fahrgeschäftes permanent erkannt und Maßnahmen automatisiert und kontrolliert eingeleitet werden. Durch eine derartige Sicherheitseinrichtung kann vorteilhafterweise eine Reduzierung einer Eintrittswahrscheinlichkeit eines Bauteilversagens von selten bzw. möglich auf unwahrscheinlich bzw. unmöglich erreicht werden.

Nach der Erfindung weisen die zweiten Mittel wenigstens eine Sicherheitssteuerung zur Beobachtung und Erkennung von Änderungen der Beanspruchungen auf. Die Sicherheitssteuerung kann Teil der Anlagensteuerung der Achterbahn und/oder des Karussells oder eine eigenständige Steuerung sein, die im zweiten Fall mit der Anlagensteuerung permanent kommuniziert. Mit einer derartigen Sicherheitssteuerung kann die Anlagensteuerung auf Änderungen der Beanspruchungen mit unterschiedlichen sicherheitsgerichteten Maßnahmen reagieren. Wird von der Sicherheitssteuerung eine Änderung der Beanspruchungen erkannt, kann die Anlagensteuerung beispielsweise eine Information oder Warnung auslösen, wobei bei Missachtung einer oder mehrerer Warnungen die Achterbahn und/oder das Karussell kontrolliert stillgesetzt oder ein Not-Aus eingeleitet werden kann. Die jeweilige Reaktion kann eine komplette Anlage oder auch nur ein Teil der Anlage, bei dem eine Änderung der Beanspruchung erkannt wurde, beispielsweise ein Fahrzeug, betreffen.

Die Sicherheitsreaktionen ist vorteilhafterweise Teil einer Anlagensteuerung der Achterbahn und/oder des Karussels oder ist permanent in Kommunikation mit der Anlagensteuerung.

In einer weiteren Ausgestaltung der Erfindung sind die Sicherheitsreaktionen in Abhängigkeit der Änderung der während der Langzeitmessung gemessenen wenigstens einen Beanspruchung und deren zeitlichen Verlauf mit wenigstens einer sicherheitsgerichteten Maßnahme einleitbar. Dadurch kann für jede Änderung eine spezifische Sicherheitsreaktion eingeleitet werden, was die Sicherheit des Fahrgeschäftes insgesamt erhöht.

Nach der Erfindung weisen die ersten Mittel eine oder mehrere Datenerfassungssysteme zur Langzeitmessung auf. Datenerfassungssysteme haben den Vorteil, dass mit ihnen Messgrößen digital weiterverarbeitet werden können.

Vorzugsweise weisen die ersten Mittel wenigstens ein Datenerfassungssystem zur Langzeitmessung von Dehnungen, Verformungen, Spannungen, Lasten oder eine Kombination der genannten Messungen auf. Derartige Beanspruchungen sind die bei Fahrgeschäften am häufigsten vorkommenden Beanspruchungen.

Das wenigstens eine Bauteil umfasst bevorzugt im Wesentlichen wenigstens eine geschweißte oder ungeschweißte Metallkonstruktion, wenigstens ein Maschinenelement, Kunststoffelement, Compositbauteil oder eine Kombination der genannten Elemente. Hierbei sind Compositbauteile Bauteile, die aus einem Compositwerkstoff bestehen, d. h. aus einem Werkstoff aus zwei oder mehr verbundenen Materialien, der andere Eigenschaften besitzt als seine einzelnen Komponenten, beispielsweise kohlenstofffaserverstärkter Kunststoff. Somit können im Wesentlichen alle auftretenden Bauteilarten eines Fahrgeschäftes erfasst werden und damit auf Änderungen von Beanspruchungen in im Wesentlichen allen Teilen eines Fahrgeschäftes mit entsprechenden Sicherheitsniveaus reagiert werden.

Das wenigstens eine Maschinenelement umfasst bevorzugt im Wesentlichen wenigstens ein mechanisch bearbeitetes Bauteil, eine Achse, eine Welle, ein Lager, ein Rad, ein Zahnrad, ein Getriebe, eine Kupplung, eine Feder, ein Verbindungsmittel oder eine Kombination der genannten Bauteile. Somit können nahezu alle auftretenden Maschinenelemente eines Fahrgeschäftes erfasst werden.

Nach der Erfindung weist die Sicherheitseinrichtung erste Mittel zur Messung eines Beanspruchungsprofils des Bauteils auf. Hier und im Folgenden bezeichnet der Begriff Beanspruchungsprofil einen zeitlichen Verlauf einer Beanspruchung. Durch ein derartiges Profil sind Abweichungen von einem Sollwertbereich für eine Beanspruchung frühzeitig erfassbar.

In einer weiteren Ausgestaltung der Erfindung weisen die ersten Mittel der Sicherheitseinrichtung wenigstens einen Dehnungsmessstreifen, lastaufnehmenden Sensor, optischen Sensor oder eine Kombination der Genannten auf. Damit sind die Beanspruchungen sensoriell spezifisch erfassbar.

Vorteilhafterweise wird die Sicherheitseinrichtung an neuen Fahrgeschäften angebracht.

Die Sicherheitseinrichtung kann auch an Bestandsanlagen anbringbar sein.

In einer bevorzugten Ausgestaltung der Erfindung wird die Achterbahn und/oder das Karussell als stationäres Fahrgeschäft oder als temporärer fliegender Bau betrieben. Damit erstreckt sich ein Anwendungsfeld der Sicherheitseinrichtung von Vergnügungsparks bis zu Volksfesten.

Das erfindungsgemäße Verfahren zur Erhöhung der Sicherheit von Achterbahnen und/oder Karussells geht aus von wenigstens einer der voran beschriebenen Sicherheitseinrichtungen, wobei erste Mittel der Sicherheitseinrichtung während der Gesamtbetriebsdauer des Fahrgeschäftes eine Langzeitmessung von wenigstens einer Beanspruchung in wenigstens einem Bauteil ausführen und dass zweite Mittel eine Änderung der während der Langzeitmessung gemessenen wenigstens einen Beanspruchung erkennen, wobei die zweiten Mittel eine von der Änderung abhängige Reaktion einleiten.

Bevorzugt erfolgen einzelne Messungen während der Langzeitmessung zufällig oder periodisch, wobei periodische Messungen zu wenigstens einem bestimmbaren Zeitpunkt über eine Periode einer oder mehrerer Fahrtzeiten des Fahrgeschäftes oder zu einem frei wählbaren sich wiederholendem Zeitpunkt, beispielsweise im Tages- oder Wochenrhythmus, erfolgen.

Die Erfindung wird anhand der nachfolgenden Figuren ausführlich erläutert. Es zeigen:
- Fig. 1: ein Ausführungsbeispiel einer Sicherheitseinrichtung und
- Fig. 2: ein Ablaufdiagramm eines Ausführungsbeispiels eines Verfahrens zur Erhöhung der Sicherheit von Fahrgeschäften.

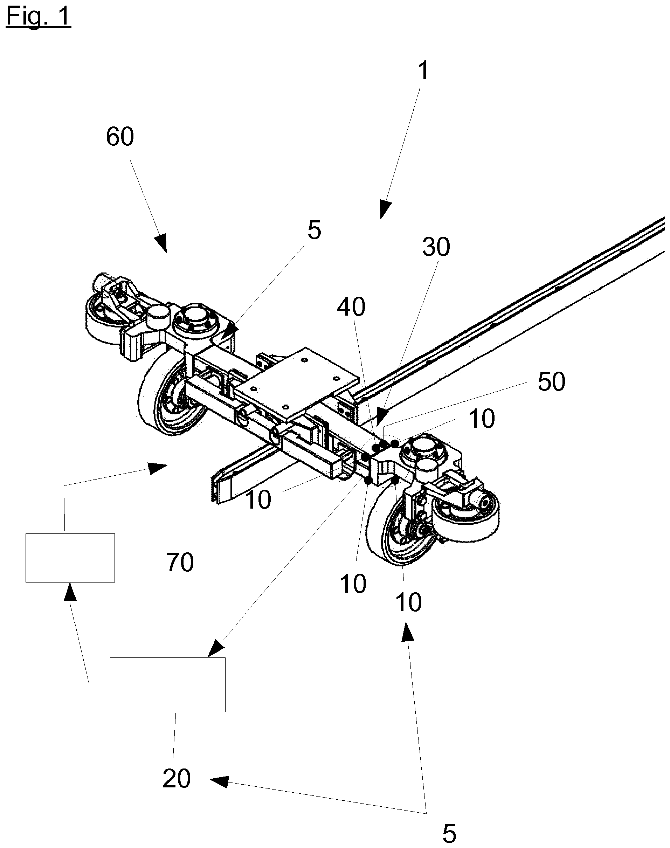

Figur 1 zeigt ein Fahrgestell eines Fahrzeuges eines Fahrgeschäftes 60, zum Beispiel einer Achterbahn. Das Fahrgestell weist eine erfindungsgemäße Vorrichtung 1 auf. Die Vorrichtung 1 umfasst Sicherheitseinrichtungen 5 an Bauteilen 40 des Fahrgeschäftes 60. Als Beispiel von Bauteilen, an denen eine Langzeitmessung von Beanspruchungen 30 erfolgt, zeigt Figur 1 eine geschweißte quaderförmige Achse mit einer Schweißnaht 50.

Erste Mittel 10 der Sicherheitseinrichtung 5 sind als Dehnungsmessstreifen an der Schweißnaht 50 platziert. Beispielsweise zeigt Figur 1 vier über den Umfang der Achse verteilt angeordnete Dehnungsmessstreifen. Die Dehnungsmessstreifen erfassen Dehnungen als auf die Schweißnaht 50 ausgeübte Beanspruchungen 30. Die Dehnungsmessstreifen können während der gesamten Fahrtdauer oder nur in bestimmten Bereichen einer Fahrtstrecke aktiv sein.

Aus Berechnungen und/oder Messungen während der Inbetriebnahme des Fahrgeschäftes 60 sind typische Dehnungen oder andere Beanspruchungen 30 der Schweißnaht 50 oder eines anderen Bauteils 40 als numerische Werte bekannt. Aus diesen Werten kann über eine festgelegte Ober- und Untergrenze ein Sollwertbereich definiert werden.

Während einer Fahrt des Fahrgeschäftes 60 gemessene oder in bestimmten Bereichen der Fahrtstrecke des Fahrgeschäftes 60 gemessene Beanspruchungen 30, beispielsweise Dehnungen, können von zweiten Mitteln 20 mittels Sicherheitssteuerungen einem vorgegebenen Sollwertbereich gegenübergestellt werden. Liegen die Beanspruchungen 30 innerhalb des Sollwertbereiches, wird die Schweißnaht 50, oder ein entsprechend anderes Bauteil 40, planmäßig beansprucht. In diesem Fall leiten die zweiten Mittel 20 keine Sicherheitsreaktion 70 ein. Wenn die gemessenen Beanspruchungen 30 den Sollwertbereich über- oder unterschreiten, liegt eine Über- oder Unterbeanspruchung des Bauteils 40 vor. Bei einer Überbeanspruchung kann gegebenenfalls eine beginnende Schädigung, beispielsweise ein Riss, an dem Bauteil 40 vorliegen. In diesem Fall können die Sicherheitssteuerungen der zweiten Mittel 20 über eine Anlagensteuerung mit passenden Maßnahmen als Sicherheitsreaktion 70 reagieren. Beispielsweise kann eine Sicherheitsreaktion 70 ein Warnsignal umfassen, wobei bei Missachtung mehrerer Warnsignale das Fahrgeschäft 60 oder ein Teil des Fahrgeschäftes, z.B. das entsprechende Fahrzeug, kontrolliert stillgesetzt werden kann.

Als weitere Sicherheitsreaktionen 70 der Anlagensteuerung werden mitumfasst beispielsweise Sicherheitsinformationen und ein Not-Aus der Anlage.

Mit den Dehnungsmessstreifen können frühzeitig bereits gefährdende Dehnungen des Bauteils 40, die noch nicht zu einem Riss geführt haben, detektiert werden.

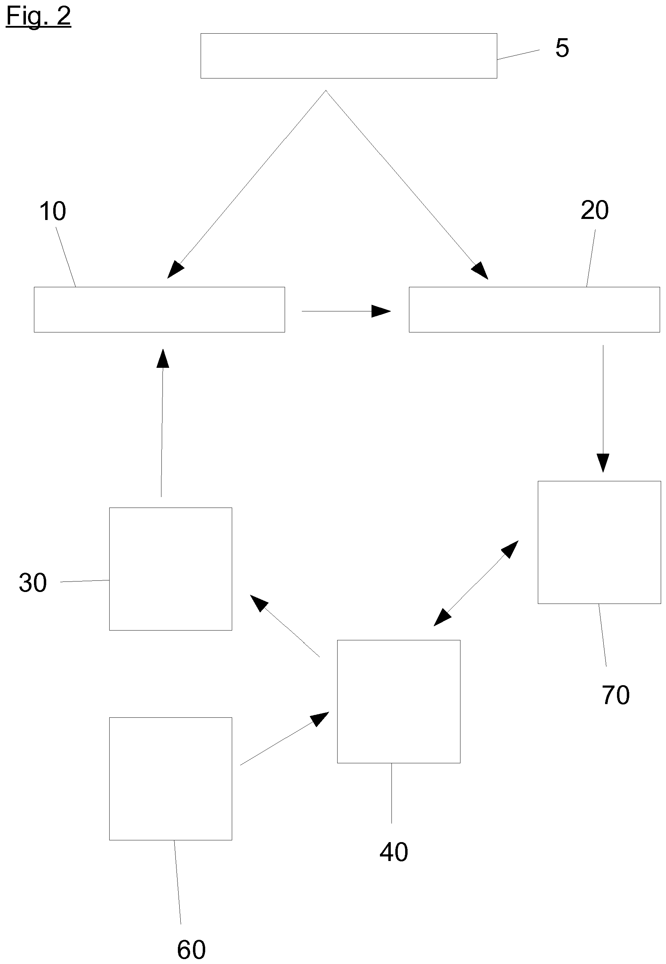

Figur 2 zeigt beispielhaft den schematischen Ablauf des Verfahrens zur Erhöhung der Sicherheit von Fahrgeschäften. Das Verfahren geht aus von einer Sicherheitseinrichtung 5 zur Langzeitüberwachung eines Bauteils 40 eines Fahrgeschäftes 60, wie beispielsweise in Figur 1 dargestellt.

Die Sicherheitseinrichtung 5 weist erste Mittel 10 zur sensorbasierten Früherkennung einer Bauteilüberbeanspruchung bzw. - unterbeanspruchung oder eines Bauteilversagens auf. Dabei können die ersten Mittel 10 als Datenerfassungssysteme beispielsweise einen Dehnungsmessstreifen, einen Lastsensor, optischen Sensor oder eine Kombination der voran genannten Sensoren aufweisen. Der optische Sensor kann ein Lichtsensor, insbesondere ein Lasersensor, sein. Mit einer derartigen sensorbasierten Früherkennung kann eine Vielzahl von Beanspruchungen 30 erfasst werden.

Die ersten Mittel 10 können Beanspruchungen 30 in einem Fahrgeschäft 60 feststellen, wie dies in Figur 1 gezeigt ist. Insbesondere können die ersten Mittel 10 bei stationären Fahrgeschäften 60, z.B. in Vergnügungsparks, oder bei Fliegenden Bauten, z.B. auf Volksfesten, eingesetzt werden. Darüber hinaus können die ersten Mittel 10 nicht nur bei neuen Fahrgeschäften 60 eingesetzt werden, sondern auch bei Bestandsanlagen. Insbesondere werden die ersten Mittel 10 bei Bauteilen 40 von Fahrgeschäften 60 eingesetzt, beispielsweise bei Metallkonstruktionen, Maschinenelementen, mechanisch bearbeiteten Bauteilen, Achsen, Wellen, Lagern, Rädern, Zahnrädern, Getrieben, Kupplungen, Federn, Verbindungsmitteln, Kunststoffelementen oder bei Compositbauteilen.

In dem Fahrgeschäft 60 bzw. in dessen Bauteilen 40 messen die ersten Mittel 10 auftretende Beanspruchungen 30 während des Betriebs des Fahrgeschäftes 60. Während des Betriebs des Fahrgeschäftes treten als Beanspruchungen 30 insbesondere Dehnungen, Verformungen, Spannungen, oder Lasten auf. Diese Beanspruchungen 30 können von den ersten Mittel 10 über einen beliebig langen Zeitraum kontinuierlich gemessen werden und ein Beanspruchungsprofil erstellt werden.

Die Sicherheitseinrichtung 5 weist ferner zweite Mittel 20 auf. Die zweiten Mittel 20 registrieren Änderungen in den gemessenen Beanspruchungen 30. Dabei weisen die zweiten Mittel 20 eine oder mehrere Sicherheitssteuerungen auf. Die Sicherheitssteuerungen sind Teil der Anlagensteuerung oder kommunizieren mit dieser. Die Anlagensteuerung leitet eine oder mehrere Sicherheitsreaktionen 70 auf eine von der Sicherheitssteuerung ermittelte Änderung der Beanspruchung 30 ein.

### Bezugszeichenliste

- 1: Vorrichtung
- 5: Sicherheitseinrichtung

- 10: Erste Mittel
- 20: Zweite Mittel

- 30: Beanspruchung
- 40: Bauteil
- 50: Schweißnaht
- 60: Fahrgeschäft

- 70: Sicherheitsreaktion

## Patentansprüche

1. Vorrichtung (1) zur Erhöhung der Sicherheit einer Achterbahn oder eines Karussells mit wenigstens einer Sicherheitseinrichtung (5),
wobei die Sicherheitseinrichtung (5) erste Mittel (10) zur Langzeitmessung von wenigstens einer Beanspruchung (30) in Form einer Zug- , Druck- oder einer Schubspannung in einem Bauteil (40) während des Betriebes der Achterbahn und/oder des Karussells und zweite Mittel (20) zur Erkennung einer Änderung der während der Langzeitmessung gemessenen wenigstens einen Beanspruchung (30) und zur Einleitung von wenigstens einer Sicherheitsreaktion (70) an der Achterbahn oder dem Karussell aufweist, wobei die Langzeitmessung eine Messung über mindestens eine Fahrtdauer einer Fahrstrecke der Achterbahn oder des Karussells ausgeführt wird und ein Beanspruchungsprofil erstellt wird,
wobei die zweiten Mittel (20) eine Sicherheitssteuerung aufweisen, die permanent mit einer Anlagensteuerung der Achterbahn oder des Karussells kommuniziert und die Sicherheitsreaktion eine Warnung umfasst und bei einer Missachtung einer oder mehrere Warnungen die Achterbahn oder das Karussell kontrolliert stillgesetzt oder ein Not-Aus eingeleitet wird,
wobei die ersten Mittel (10) ein oder mehrere Datenerfassungssysteme zur Langzeitmessung aufweisen und das zweite Mittel (20) die Änderung basierend auf dem Beanspruchungsprofil des Bauteils (40) erkennt.

2. Vorrichtung nach Anspruch 1,
**dadurch gekenzeichnet**, dass
die Sicherheitseinrichtung (5) zweite Mittel (20) zur Einleitung wenigstens einer automatischen Sicherheitsreaktion (70) aufweist.

3. Vorrichtung (1) nach einem der vorhergehenden AnsprUche,
**dadurch gekenzeichnet**, dass
die zweiten Mittel (20) wenigstens eine Sicherheitssteuerung zur Beobachtung und Erkennung von Änderungen des Beanspruchungsprofil (30) aufweisen.

4. Vorrichtung (1) nach Anspruch 3,
**dadurch gekennzeichnet, dass**
die wenigstens eine Sicherheitssteuerung entweder Teil einer Anlagensteuerung der Achterbahn und/oder des Karussells ist oder mit der Anlagensteuerung permanent kommuniziert.

5. Vorrichtung (1) nach einem der vorhergehenden Ansprüche,
**dadurch gekennzeichnet, dass**
die wenigstens eine Sicherheitsreaktion (70) in Abhängigkeit der Änderung der während der Langzeitmessung gemessenen wenigstens einen Beanspruchungsprofil (30) und deren zeitlichen Verlaufs mit wenigstens einer sicherheitsgerichtete Maßnahme an der Achterbahn und/oder dem Fahrgeschäft automatisiert einleitbar ist.

6. Vorrichtung (1) nach einem der vorhergehenden Ansprüche,
**dadurch gekennzeichnet, dass**
die ersten Mittel (10) wenigstens ein Datenerfassungssystem zur Langzeitmessung aufweisen.

7. Vorrichtung (1) nach Anspruch 6,
**dadurch gekennzeichnet, dass**
die ersten Mittel (10) wenigstens ein Datenerfassungssystem zur Langzeitmessung von Dehnungen, Verformungen, Spannungen, Lasten oder eine Kombination der genannten Messungen aufweisen.

8. Vorrichtung (1) nach einem der vorhergehenden Ansprüche,
**dadurch gekennzeichnet, dass**
das wenigstens eine Bauteil (40) im Wesentlichen wenigstens eine geschweißte oder ungeschweißte Metallkonstruktion, wenigstens ein Maschinenelement, Kunststoffelement, Compositbauteil oder eine Kombination der genannten Elemente aufweist.

9. Vorrichtung (1) nach Anspruch 8,
**dadurch gekennzeichnet, dass**
das wenigstens eine Maschinenelement im Wesentlichen wenigstens ein mechanisch bearbeitetes Bauteil, eine Achse, eine Welle, ein Lager, ein Rad, ein Zahnrad, ein Getriebe, eine Kupplung, eine Feder, ein Verbindungsmittel oder eine Kombination der genannten Elemente aufweist.

10. Vorrichtung (1) nach einem der vorhergehenden Anspruche,
**dadurch gekennzeichnet, dass**
die ersten Mittel (10) der Sicherheitseinrichtung (5) wenigstens einen Dehnungsmessstreifen lastaufnehmenden Sensor, optischen Sensor oder eine Kombination der Genannten aufweisen.

11. Vorrichtung (1) nach einem der vorhergehenden AnsprUche,
**dadurch gekennzeichnet, dass**
die Sicherheitseinrichtung (5) nachrüstbar gestaltet ist.

12. Vorrichtung (1) nach einem der vorhergehenden Ansprüche,
**dadurch gekennzeichnet**, dassdie Achterbahn und/oder das Karussell als stationäres Fahrgeschäft oder als temporärer fliegender Bau betreibbar ist.

13. Verfahren zur Erhöhung der Sicherheit von Fahrgeschäften (60) mit wenigstens einer Sicherheitseinrichtung (5) nach einem der vorhergehenden Ansprüche,
**dadurch gekennzeichnet, dass** erste Mittel (10) der Sicherheitseinrichtung (5) während der Gesamtbetriebsdauer des Fahrgeschäftes (60) eine Langzeitmessung von wenigstens einem Beanspruchungsprofil (30) in wenigstens einem Bauteil (40) ausführen und dass zweite Mittel (20) eine Änderung der während der Langzeitmessung gemessenen wenigstens einen Beanspruchung (30) erkennen, wobei die zweiten Mittel (20) eine von der Änderung abhängige automatische Sicherheitsreaktion (70) an der Achterbahn und/oder dem Karussell einleiten.

14. Verfahren nach Anspruch 13,
**dadurch gekennzeichnet, dass** einzelne Messungen während der Langzeitmessung zufällig oder periodisch erfolgen, wobei periodische Messungen zu wenigstens einem bestimmbaren Zeitpunkt über eine Periode einer oder mehrerer Fahrtzeiten des Fahrgeschäftes (60) oder zu einem frei wählbaren sich wiederholendem Zeitpunkt erfolgen.

## Claims

1. Apparatus (1) for increasing the safety of a roller coaster or carousel, having at least one safety device (5),
wherein the safety device (5) comprises at least one means (10) for the long-term measurement of at least one stress (30), in the form of a tensile, compressive or shear stress, in a component (40) during operation of the roller coaster and/or of the carousel, and a second means (20) for detecting a change in the at least one stress (30) measured during the long-term measurement and for triggering at least one safety reaction (70) on the roller coaster or carousel,
wherein the long-term measurement is a measurement which is carried out over at least one travelling time of a ride distance of the roller coaster or of the carousel and a stress profile is compiled,
wherein the second means (20) comprise a safety controller which is in permanent communication with a system controller of the roller coaster or of the carousel and wherein the safety reaction includes a warning and wherein, if one or more warnings are disregarded, a controlled shutdown of the roller coaster or of the carousel, or an emergency stop, is triggered,
wherein the first means (10) comprises one or more data acquisition systems for long-term measurement and the second means (20) detects the changes based on the stress profile of the component (40).

2. Apparatus in accordance with claim 1,
**characterized in that**
the safety device (5) comprises second means (20) for triggering at least one automatic safety reaction (70).

3. Apparatus in accordance with either of the preceding claims,
**characterized in that**
the second means (20) comprise at least one safety controller for monitoring and detecting changes in the stress profile (30).

4. Apparatus (1) in accordance with claim 3,
**characterized in that**
the at least one safety controller is either part of a system controller of the roller coaster and/or of the carousel or is in permanent communication with the system controller.

5. Apparatus (1) in accordance with any of the preceding claims,
**characterized in that**
the at least one safety reaction (70), with at least one safety-oriented measure on the roller coaster and/or on the carousel, can be automatedly triggered in dependency on the change in the at least one stress profile (30) measured during the long-term measurement and its time path.

6. Apparatus (1) in accordance with any of the preceding claims,
**characterized in that**
the first means (10) comprise at least one data acquisition system for long-term measurement.

7. Apparatus (1) in accordance with claim 6,
**characterized in that**
the first means (10) comprise at least one data acquisition system for the long-term measurement of elongation, deformation, stresses, loads or a combination of the mentioned measurements.

8. Apparatus (1) in accordance with any of the preceding claims,
**characterized in that**
the at least one component (40) substantially comprises at least one welded or unwelded metal construction, at least one machine element, a plastic element, a composite component or a combination of the mentioned elements.

9. Apparatus (1) in accordance with claim 8,
**characterized in that**
the at least one machine element substantially comprises at least one mechanically machined component, an a axel, a shaft, a bearing, a wheel, a gear wheel, a transmission, a coupling, a spring, a connection means or a combination of the mentioned elements.

10. Apparatus (1) in accordance with any of the preceding claims,
**characterized in that**
the first means (10) of the safety device (5) comprises at least one strain gauge load-bearing sensor, an optical sensor or a combination of the aforementioned.

11. Apparatus (1) in accordance with any of the preceding claims,
**characterized in that**
the safety device (5) is implemented to be retrofittable.

12. Apparatus (1) in accordance with any of the preceding claims,
**characterized in that**
the roller coaster and/or the carousel can be operated as a stationary amusement ride or as a temporary flying structure.

13. Method for increasing the safety of amusement rides (60), having at least one safety device (5) in accordance with any of the preceding claims,
**characterized in that**
first means (10) of the safety device (5) carry out, during the entire period of operation of the amusement ride (60), a long-term measurement of at least one stress profile (30) in at least one component (40) and the second means (20) detect a change in the at least one stress (30) measured during the long-term measurement, wherein the second means (20) triggers an automatic safety reaction (70) on the roller coaster and/or carousel which is dependent on the change.

14. Method in accordance with claim 13,
**characterized in that**
individual measurements are randomly or periodically carried out during the long-term measurement, whereby periodic measurements are carried out at at least one specific point in time during the course of one or more travelling times of the amusement ride (60) or at a freely selectable, recurrent point in time.

## Revendications

1. Dispositif (1) pour augmenter la sécurité d'une montagne russe ou d'un carrousel avec au moins une installation de sécurité (5),
- l'installation de sécurité (5) présente des premiers moyens (10) pour la mesure longue durée d'au moins une contrainte (30) sous la forme d'une traction ou pression ou une contrainte au cisaillement dans un composant (40) pendant le fonctionnement de la montagne russe et/ou du carrousel et des seconds moyens (20) pour détecter une modification de cette contrainte (30) mesurée pendant la mesure longue dure et pour le déclenchement d'au moins une réaction de sécurité (70) pour la montagne russe et/ou le carrousel,
- la mesure longue durée se fait pendant au moins la durée d'un trajet de la montagne russe et/ou du carrousel et on réalise un profil de contrainte,
- les seconds moyens (20) comportent une commande de sécurité qui communique de manière permanente avec une commande des installations de la montagne russe et/ou du carrousel et la réaction de sécurité comprend une alarme et lors de la non prise en compte d'une ou plusieurs alarmes, la montagne russe et/ou le carrousel est arrêté de manière contrôlée ou soumis à un arrêt d'urgence,
- les premiers moyens (10) présentent un ou plusieurs systèmes de saisie de données pour la mesure longue durée et le second moyen (20) détecte la modification sur la base du profil de contraintes du composant (40).

2. Dispositif selon la revendication 1,
**caractérisé en ce que**
l'installation de sécurité (5) présente des seconds moyens (20) pour le déclenchement d'une réaction de sécurité (70) automatique.

3. Dispositif (1) selon une des revendications précédentes,
**caractérisé en ce que**
les moyens (20) présentent au moins une commande de sécurité pour surveiller et détecter une modification du profil de contrainte (30).

4. Dispositif (1) selon la revendication 3,
**caractérisé en ce qu'**
au moins cette commande de sécurité est soit une partie d'une commande d'installation de la montagne russe et/ou du carrousel ou communique en permanence avec la commande d'installation.

5. Dispositif (1) selon une des revendications précédentes,
**caractérisé en ce qu'**
au moins cette réaction de sécurité (70), peut être déclenchée automatiquement avec au moins une mesure orientée vers la sécurité en fonction de la modification du profil de contrainte (30) mesuré pendant la mesure longue durée et de son chronogramme.

6. Dispositif (1) selon une des revendications précédentes,
**caractérisé en ce que**
les premiers moyens (10) présentent au moins un système de saisie de données pour la mesure longue durée.

7. Dispositif (1) selon la revendication 6,
**caractérisé en ce que**
les premiers moyens (10) présente au moins un système de saisie de données pour la mesure longue durée de dilatation, déformation, tension, charge ou une combinaison des mesures citées.

8. Dispositif (1) selon une des revendications précédentes,
**caractérisé en ce que**
l'unique composant (40) présente essentiellement au moins une construction métallique soudée, au moins un élément mécanique, un élément en matière plastique, en matériau composite ou une combinaison des éléments cités.

9. Dispositif (1) selon la revendication 8,
**caractérisé en ce que**
cet élément de machine comporte au moins une pièce usinée mécaniquement, un axe, un arbre, un palier, une roue, une roue dentée, un entrainement, un embrayage, un ressort, un moyen de liaison ou une combinaison des éléments cités.

10. Dispositif (1) selon une des revendications précédentes,
**caractérisé en ce que**
les premiers moyens (10) de l'installation de sécurité (5) comportent au moins un capteur de charge à jauge de contrainte, des capteurs optiques ou une combinaison de ceux-ci.

11. Dispositif (1) selon une des revendications précédentes,
**caractérisé en ce que**
l'installation de sécurité (5) est réalisée en seconde monte.

12. Dispositif (1) selon une des revendications précédentes,
**caractérisé en ce que**
la montagne russe et/ou le carrousel est conçue comme manège fixe ou manège itinérant.

13. Procédé pour augmenter la sécurité de manèges (60) avec au moins une installation de sécurité (5) selon une des revendications précédentes,
**caractérisées en ce que**
des premiers moyens (10) de l'installation de sécurité (5) effectuent une mesure longue durée pendant la durée complète de fonctionnement du manège (60) d'au moins un profil de contrainte (30) dans au moins un composant (40) et que des seconds moyens (20) détectant une modification d'au moins une contrainte (30) mesurée pendant la mesure longue durée, les seconds moyens (20) déclenchent une réaction de sécurité (70) automatique dépendant de la modification, pour la montagne russe et/ou le carrousel.

14. Procédé selon la revendication 13,
**caractérisé en ce que**
des mesures isolées sont réalisées au hasard ou périodiquement pendant la mesure longue durée, les mesures périodiques se faisant à au moins un instant prédéterminé d'une période d'un ou plusieurs trajets du manège (60) ou à l'instant choisi librement se répétant.
